# EUROPÄISCHE PATENTSCHRIFT

(11) **EP 2 334 473 B1**
(45) Veröffentlichungstag und Bekanntmachung des Hinweises auf die Patenterteilung: **05.03.2014**
(21) Anmeldenummer: 09782598.8
(22) Anmeldetag: 04.09.2009
(51) Int. Cl.: F16C 19/50, F16C 41/00, B25B 21/00, B25F 5/00, F16D 41/10, F16B 1/04

(54) **HANDWERKZEUGMASCHINE MIT AUTOMATISCHER SPINDELARRETIERUNG**
HAND-HELD POWER TOOL HAVING AUTOMATIC SPINDLE LOCKING
OUTIL À MAIN À BLOCAGE AUTOMATIQUE DE LA BROCHE

(30) Priorität: 14.10.2008 DE 102008042812; 13.07.2009 DE 102009027643
(43) Veröffentlichungstag der Anmeldung: 22.06.2011
(73) Patentinhaber: Robert Bosch GmbH, 70442 Stuttgart (DE)
(72) Erfinder: HECHT, Joachim, 71106 Magstadt (DE); ROEHM, Heiko, 70176 Stuttgart (DE); KRAUS, Martin, 70794 Filderstadt (DE)
(86) Internationale Anmeldenummer: PCT/EP2009/061443
(87) Internationale Veröffentlichungsnummer: WO 2010/043449

(56) Entgegenhaltungen:
- EP-A2- 1 955 818
- WO-A1-2005/108814
- DE-A1- 19 750 262
- DE-A1- 19 916 295
- DE-A1- 19 916 295
- US-A- 1 982 886
- US-A- 5 016 501
- US-A1- 2002 101 106

## Beschreibung

### Stand der Technik

Die Erfindung geht aus von einer Handwerkzeugmaschinenvorrichtung, insbesondere für einen Schrauber nach dem Oberbegriff des Anspruchs 1.

Es ist bereits eine Handwerkzeugmaschinenvorrichtung, insbesondere für einen Schrauber, mit einer Arretiervorrichtung zu einem Arretieren einer Abtriebseinheit und mit einer Drehlagervorrichtung der Abtriebseinheit vorgeschlagen worden.

### Offenbarung der Erfindung

Die Erfindung geht aus von einer Handwerkzeugmaschinenvorrichtung, insbesondere für einen Schrauber, mit einer Arretiervorrichtung zu einem Arretieren einer Abtriebseinheit und mit einer Drehlagervorrichtung der Abtriebseinheit.

Es wird vorgeschlagen, dass die Arretiervorrichtung und die Drehlagervorrichtung zumindest teilweise einstückig ausgebildet sind. In diesem Zusammenhang soll unter einer "Arretiervorrichtung" insbesondere eine Vorrichtung verstanden werden, die dazu vorgesehen ist, in zumindest einem Betriebszustand eine Abtriebseinheit und/oder eine Drehbewegung der Abtriebseinheit zu unterbinden und/oder zu verhindern. Unter einer "Abtriebs-einheit" soll hier insbesondere eine Einheit verstanden werden, die zumindest eine Abtriebsspindel aufweist, die in zumindest einem Betriebszustand der Handwerkzeugmaschinenvorrichtung von einem Elektromotor antreibbar ist und ein Werkzeug, insbesondere zum Schrauben, Bohren, Fräsen und/oder Meißeln, drehend antreibt. Eine "Drehlager-vorrichtung" stellt hier insbesondere eine Vorrichtung dar, die zu einer drehenden Lagerung eines Bauteils und insbesondere eines Bauteils der Abtriebseinheit bzw. der Abtriebsspindel vorgesehen ist und/oder bei der im Falle einer Rotationsbewegung des zu lagernden Bauteils eine Relativbewegung des Bauteils gegenüber der Drehlagervorrichtung auftritt. Ferner soll unter "vorgesehen" speziell ausgestattet und/oder ausgelegt verstanden werden. In diesem Zusammenhang soll unter "einstückig" insbesondere verstanden werden, dass die Arretiervorrichtung nur unter Funktionsverlust von der Drehlagervorrichtung getrennt werden kann und/oder dass zumindest ein Bestandteil der Arretiervorrichtung und ein Bestandteil der Drehlagervorrichtung von demselben Bauteil gebildet werden. Dabei wird im Betrieb über zumindest ein Bauteil der Arretiervorrichtung eine Lagerkraft des von der Drehlagervorrichtung drehbar gelagerten Bauteils radial nach außen abgestützt. Die Wendung "zumindest teilweise" definiert hierbei, dass zumindest ein Bauteil, wie beispielsweise ein Klemmmittel der Arretiervorrichtung, einstückig mit der Drehlagervorrichtung ausgebildet ist. Durch die einstückige Gestaltung kann die Handwerkzeugmaschinenvorrichtung bzw. können die Arretiervorrichtung und die Drehlagervorrichtung besonders vorteilhaft Bauteil, Kosten, Montageaufwand und Bauraum sparend realisiert werden. Vorteilhaft befinden sich die Drehlagervorrichtung und die Arretiervorrichtung in einer gemeinsamen, senkrechten zu einer Drehachse der Drehlagervorrichtung verlaufenden Ebene. Vorteilhafterweise kann dadurch eine Gesamtbaulänge der Handwerkzeugmaschine verringert werden.

Um eine vorteilhafte Lagerung des von der Drehlagervorrichtung zu lagernden Bauteils zu erreichen, weist die Handwerkzeugmaschinenvorrichtung entlang eines Kraftflusses einer Lagerkraft des zu lagernden Bauteils der Drehlagervorrichtung und der Arretiervorrichtung ein Radialspiel vorteilhaft kleiner als 0,1 mm und besonders vorteilhaft kleiner als 0,05 mm auf. Besonders bevorzugt weist ein Klemmmittel der Arretiervorrichtung, welches einen Teil der Drehlagervorrichtung bildet und insbesondere eine Lagerfläche bildet, und/oder ein Bauteil, auf welches direkt oder indirekt vom Klemmmittel eine Lagerkraft der Drehlagervorrichtung übertragen wird, ein Radialspiel kleiner als 0,1 mm und besonders bevorzugt kleiner als 0,05 mm auf.

Des Weiteren wird vorgeschlagen, dass die Arretiervorrichtung ein Klemmmittel aufweist, welches eine Lauffläche der Drehlagervorrichtung bildet und von einem Klemmring gebildet ist. In diesem Zusammenhang soll unter einem "Klemmmittel" insbesondere ein Mittel verstanden werden, dass in einem Betriebszustand einer Arretierung der Abtriebseinheit an einer Einstellung und/oder Einhaltung eines Arretierprozesses beteiligt ist. Hierbei kann eine Beteiligung des Klemmmittels bzw. des Klemmrings sowohl aktiv bzw. über eine Bewegung des Klemmmittels mit einem bewegbar angetriebenen Element, wie beispielsweise der Abtriebsspindel, erfolgen oder auch passiv bzw. über eine bewegungslose ortsfeste Anordnung des Klemmmittels erfolgen. Unter einer "Lauf-fläche" soll hier insbesondere eine Fläche bzw. Oberfläche eines Bauteils bzw. eines Klemmmittels verstanden werden, an bzw. auf der bei einer Drehbewegung der Abtriebseinheit ein weiteres Element der Drehlagervorrichtung bewegt und/oder abgewälzt wird und/oder die sich bei der Drehbewegung auf dem weiteren Element bewegt. Durch die Realisierung der Lauffläche kann eine besonders vorteilhafte und reibungsarme Bewegung der Abtriebseinheit bereitgestellt werden.

Ferner ist es vorteilhaft, wenn der Klemmring eine Lagerfläche zu einer direkten Abstützung in einem Getriebegehäuse aufweist. Hierbei soll unter einer "Lagerfläche" insbesondere eine Fläche verstanden werden, die Lagerkräfte der Abtriebseinheit bzw. der Abtriebsspindel an einem Getriebegehäuse abstützt, wobei ein "Getriebegehäuse" ein von einem Maschinengehäuse separat ausgeführtes Gehäuse darstellt, das ein Getriebe bzw. die Handwerkzeugvorrichtung zumindest in einer Umfangsrichtung umgibt. Unter einer "direkten Abstützung" soll insbesondere verstanden werden, dass zumindest 50%, bevorzugt zumindest 75% und besonders bevorzugt 100% eines Außenumfangs des Klemmrings einen direkten Kontakt in der Form eines kraft- und/oder reibschlüssigen Kontakts zu dem Getriebegehäuse aufweisen. Durch die erfindungsgemäße Ausgestaltung können Lagerkräfte konstruktiv einfach und effektiv abgestützt werden.

In einer weiteren Ausgestaltung der Erfindung wird vorgeschlagen, dass das Klemmmittel eine radial innere Lauffläche bildet, wobei unter einer "radial inneren Lauffläche" insbesondere eine Fläche beschrieben wird, die zu einem Mittelpunkt der Abtriebseinheit ausgerichtet ist. Das Klemmmittel wird von dem Klemmring gebildet, der die direkte Abstützung am Getriebegehäuse vermittelt und ein in Bezug auf die Abtriebseinheit unbewegliches bzw. ortsfestes Bauteil darstellt. Ferner wird ein weiteres Element der Drehlagervorrichtung auf der Lauffläche bewegt. Zudem ist die innere Lauffläche dazu vorgesehen, einen Platzbedarf eines einzuklemmenden Bauteils in zumindest einem Betriebszustand einzuschränken. Durch die innere Lauffläche wird eine konstruktiv einfache Bewegung bzw. Lagerung ermöglicht.

Ferner wird vorgeschlagen, dass das Klemmmittel eine radial äußere Lauffläche bildet, wobei unter einer "radial äußeren Lauffläche" insbesondere verstanden werden soll, dass die Lauffläche von dem Mittelpunkt der Abtriebseinheit weg weisend angeordnet ist. Das Klemmmittel ist bevorzugt von einem Klemmring und/oder von einer im Wesentlichen ringförmigen und/oder dreieckförmigen Scheibe gebildet, die ein Bestandteil der Abtriebseinheit ist und drehfest mit der Abtriebsspindel bewegt werden kann. Durch die radial äußere Lauffläche kann eine besonders einfache und ruhige Interaktion mit der radial inneren Lauffläche ermöglicht werden.

Des Weiteren kann es vorteilhaft sein, wenn die Arretiervorrichtung zumindest einen Arretierwälzkörper aufweist, der ein Wälzlagermittel der Drehlagervorrichtung bildet. In diesem Zusammenhang soll unter einem "Arretierwälzkörper" insbesondere ein Wälzkörper verstanden werden, der im Prozess der Arretierung der Abtriebseinheit durch eine wälzende Bewegung bewegt wird und/oder der durch diese Bewegung in eine Position gebracht wird, die die Abtriebseinheit arretiert bzw. eine Bewegung der Abtriebseinheit unterbindet. Unter einem "Wälzkörper" soll hier jeglicher, dem Fachmann als sinnvoll erscheinender Körper, wie beispielsweise eine Kugel, eine Rolle, eine Tonne, eine Nadel, ein Kegel und/oder insbesondere eine Walze, verstanden werden, der eine Abwälzbewegung durchführen kann. Ein "Wälzlagermittel" stellt hier insbesondere ein Mittel dar, das sowohl eine Eigenschaft, wie eine Form, aufweist, um eine Wälzbewegung durchzuführen und eine Lagerfunktion auszuüben. Durch diese Doppelfunktion können Bauteile, Kosten, Montageaufwand und Bauraum vorteilhaft eingespart werden.

Eine besonders sichere Lagerung kann vorteilhaft erreicht werden, wenn die Drehlagervorrichtung wenigstens ein von einem Arretierwälzkörper differierendes Wälzlagermittel aufweist. Unter einem "Wälzlagermittel" soll hier insbesondere ein Mittel, wie beispielsweise ein Wälzkörper, verstanden werden, das ein Bestandteil eines Wälzlagers ist, wobei ein Wälzlager insbesondere ein Lager darstellt, bei dem zwei zueinander bewegliche Komponenten, wie beispielsweise der Klemmring und die Abtriebsspindel, durch drehbar bewegte Körper getrennt angeordnet sind. In diesem Zusammenhang soll unter einem "von einem Arretierwälzkörper differierendes Wälzlagermittel" insbesondere verstanden werden, dass das Wälzlagermittel in Bezug auf einen Arretierwälzkörper als separates und unabhängiges Bauteil ausgebildet ist. Mittels der separaten Ausführung kann konstruktiv einfach erreicht werden, dass jedes Bauteil bzw. der Arretierwälzkörper bzw. das Wälzlagermittel auf seine spezielle Funktion ausgelegt und/oder gefertigt werden kann. Ferner wird durch eine Bereitstellung eines Wälzlagers ein Lager bereitgestellt, das mit geringer Rollreibung betrieben werden kann.

Zudem wird vorgeschlagen, dass die Drehlagervorrichtung wenigstens ein Gleitlagermittel aufweist. In diesem Zusammenhang soll unter einem "Gleitlagermittel" insbesondere ein Mittel mit zumindest einer Gleitlagerfunktion verstanden werden, wobei eine "Gleitlager-funktion" bedeutet, dass das Gleitlagermittel einen direkten Kontakt mit seinem Lagerpartner aufweist. Bevorzugt stellt das Gleitlagermittel ein Klemmmittel und/oder einen Klemmring dar und bildet mit einem weiteren Gleitlagermittel, wie beispielsweise einem Bestandteil der Abtriebseinheit bzw. der Abtriebsspindel, ein Gleitlager. Durch die Verwendung des Gleitlagermittels und damit des Gleitlagers wird zum einen eine konstruktiv einfache und zuverlässige Lagerung bereitgestellt und zum anderen können Montageaufwand, Kosten und Bauteile eingespart werden.

Erfindungsgemäß weist die Handwerkzeugmaschinenvorrichtung ein Plane-tengetriebe auf, wobei ein Planetenträger des Planetengetriebes zumindest ein Positioniermittel zu einer Positionierung zumindest eines Arretierwälzkörpers in seiner Freigabeposition aufweist, wodurch vorteilhaft eine robuste und Platz sparende Getriebekonstruktion bereitgestellt wird.

In diesem Zusammenhang soll unter einem "Positioniermittel" insbesondere ein Mittel verstanden werden, das dazu vorgesehen ist, eine Position und/oder eine Lage eines Arretierwälzkörpers und/oder der Arretierwälzkörper in Umfangsrichtung zu sichern und/oder festzulegen. Unter "einer Freigabeposition des Arretierwälzkörpers" soll insbesondere die Position verstanden werden, in der der Arretierwälzkörper einen Drehantrieb insbesondere der Abtriebsspindel zulässt. Ferner kann das Positioniermittel auch zu einer Positionierung des Wälzlagermittels dienen. Das Positioniermittel ist bevorzugt als ein in axialer Richtung zum Werkzeug weisender Höcker ausgebildet. Durch die Realisierung des Positioniermittels kann eine sichere Übertragung eines Drehmoments gewährleistet werden.

Zudem kann eine robuste Antriebsübertragung erfolgen, wenn der Planetenträger zumindest ein Antriebsmittel zu einer Übertragung des Drehmoments aufweist. In diesem Zusammenhang soll unter einem "Antriebsmittel" insbesondere ein Mittel, wie eine Ausnehmung, ein Fortsatz und/oder ein anderes, dem Fachmann als zweckdienlich erscheinendes Mittel verstanden werden, das einen Drehantrieb eines Antriebsmotors über das Planetengetriebe auf die Abtriebseinheit und damit auf das Werkzeug übertragen kann.

Vorteilhafterweise weist die Drehlagervorrichtung eine mit einer Welle der Abtriebseinheit direkt gekoppelte Gleitlagerbuchse auf. Hierbei soll unter einer "Gleitlagerbuchse" insbesondere eine Buchse aus Bronze verstanden werden. Grundsätzlich wäre jedoch die Verwendung einer Buchse, die auf einem anderen, dem Fachmann als zweckdienlich erscheinendem Prinzip zu einer selbstschmierenden Lagerung beruht, denkbar. Unter einer "direkten Kopplung" soll insbesondere eine Kopplung verstanden werden, die ohne zwischengeschaltete Bauteile auskommt. Durch die Gleitlagerbuchse kann eine Bauteil sparende Lagerung bereitgestellt werden.

Ferner ist es vorteilhaft, wenn die Gleitlagerbuchse zumindest ein Aufnahmemittel zu einer Aufnahme zumindest eines Arretierwälzkörpers aufweist, wodurch die Arretiervorrichtung konstruktiv einfach in die Drehlagervorrichtung eingepasst werden kann.

In einer weiteren Ausgestaltung der Erfindung wird zudem eine Handwerkzeugmaschine mit einer Handwerkzeugmaschinenvorrichtung vorgeschlagen. Hierbei eignet sich die erfindungsgemäße Handwerkzeugmaschinenvorrichtung insbesondere für Handwerkzeugmaschinen zum Bohren, Schrauben und/oder Hämmern. Ein Einsatz bei anderen, dem Fachmann als sinnvoll erscheinenden Handwerkzeugmaschinen ist jedoch ebenfalls denkbar.

### Zeichnung

Weitere Vorteile ergeben sich aus der folgenden Zeichnungsbeschreibung. In der Zeichnung sind Ausführungsbeispiele der Erfindung dargestellt.

Es zeigen:
- Fig. 1: eine Handwerkzeugmaschine mit einer erfindungsgemäßen Handwerkzeugmaschinenvorrichtung,
- Fig. 2: einen Schnitt durch ein Getriebegehäuse der Handwerkzeugmaschine gemäß der Figur 1,
- Fig. 3: einen Schnitt III-III durch die Handwerkzeugmaschinenvorrichtung gemäß der Figur 2,
- Fig. 4: eine Schnittdarstellung durch eine alternative Handwerkzeugmaschinenvorrichtung,
- Fig. 5: eine Schnittdarstellung durch eine dritte Ausführungsform der Handwerkzeugmaschinenvorrichtung,
- Fig. 6: die Handwerkzeugmaschinenvorrichtung der Figur 5 in einer Explosionsdarstellung,
- Fig. 7: eine Draufsicht auf einen Teil eines Planetengetriebes der Handwerkzeugmaschinenvorrichtung der Figur 5,
- Fig. 8: die Handwerkzeugmaschinenvorrichtung der Figur 5 in einem montierten Zustand,
- Fig. 9: eine Schnittdarstellung durch eine vierte alternative Ausführungsform der Handwerkzeugmaschinenvorrichtung,
- Fig. 10: eine Explosionsdarstellung einer fünften Variante der Handwerkzeugmaschinenvorrichtung,
- Fig. 11: eine Schnittdarstellung durch eine sechste alternative Ausführungsform der Handwerkzeugmaschinenvorrichtung,
- Fig. 12: eine Schnittdarstellung durch eine siebte alternative Ausführungsform der Handwerkzeugmaschinenvorrichtung und
- Fig. 13: eine Schnittdarstellung durch eine achte alternative Ausführungsform der Handwerkzeugmaschinenvorrichtung.

### Beschreibung der Ausführungsbeispiele

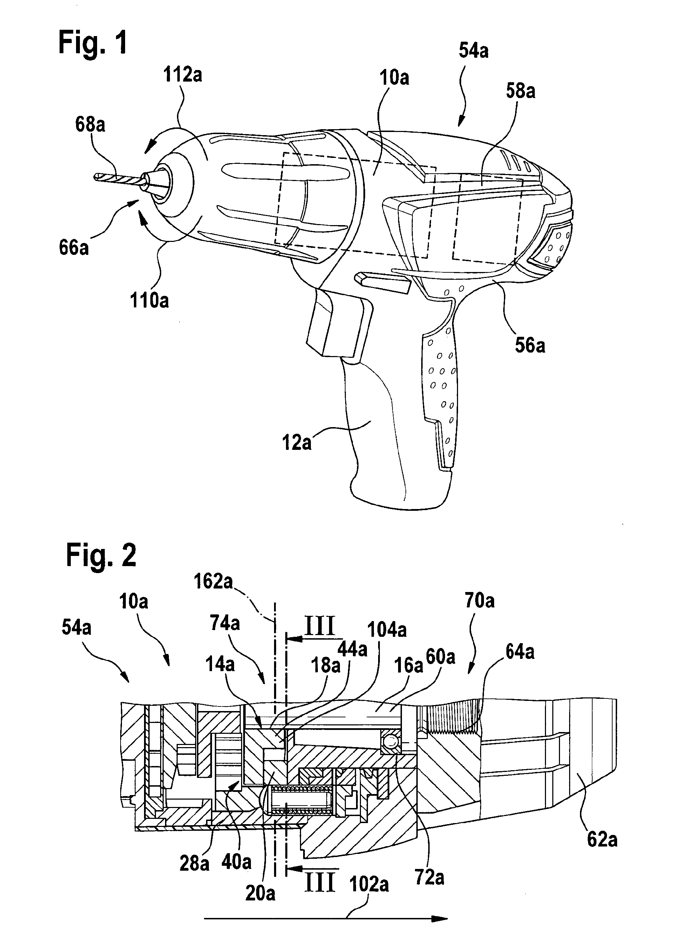

Figur 1 zeigt eine schematisch dargestellte Handwerkzeugmaschine 54a in der Form eines Schraubers 12a mit einem in einem Maschinengehäuse 56a angeordneten Antriebsmotor 58a, mit dem über eine nicht im Detail gezeigte Antriebswelle ein auf einer Abtriebsspindel 60a einer Abtriebseinheit 16a angeordnetes Planetengetriebe 40a und über die Abtriebsspindel 60a ein Bohrfutter 62a in der Form eines Schnellspannbohrfutters drehend antreibbar ist. Das Bohrfutter 62a ist über eine Gewindeverbindung 64a mit der Abtriebsspindel 60a verbunden und besitzt eine Spannvorrichtung 66a zum Befestigen eines Werkzeugs 68a, das in Drehrichtung der Abtriebsspindel 60a betätigbar ist (Fig. 1 und 2).

Ferner besitzt die Handwerkzeugmaschine 54a eine Handwerkzeugmaschinenvorrichtung 10a mit einer Arretiervorrichtung 14a zu einem Arretieren der Abtriebseinheit 16a, über die die Abtriebsspindel 60a zum Lösen und Schließen der Spannvorrichtung 66a gegenüber dem Maschinengehäuse 56a drehfest koppelbar ist. Diese Arretiervorrichtung 14a wird bei einer Drehmomentübertragung vom Antriebsmotor 58a zum Bohrfutter 62a selbsttätig geöffnet und bei einer Drehmomentübertragung vom Bohrfutter 62a zum Antriebsmotor 58a selbsttätig gesperrt.

Wie in der Figur 2, die eine Schnittdarstellung durch ein Getriebegehäuse 28a der Handwerkzeugmaschine 54a zeigt, zu sehen ist, wird die Abtriebsspindel 60a in einem dem Bohrfutter 62a zugewandten Endbereich 70a der Abtriebsspindel 60a in einem Lager 72a lagernd gehalten. Der dem Bohrfutter 62a abgewandte Endbereich 74a der Abtriebsspin-del 60a hingegen wird von der Arretiervorrichtung 14a, die somit einen Teil einer Drehlagervorrichtung 18a der Abtriebseinheit 16a bildet, gelagert, wodurch die Arretiervorrichtung 14a und die Drehlagervorrichtung 18a zumindest teilweise einstückig ausgebildet sind. Somit stellt die Drehlagervorrichtung 18a in dem Endbereich 74a der Abtriebseinheit 16a das einzige Lagermittel dar.

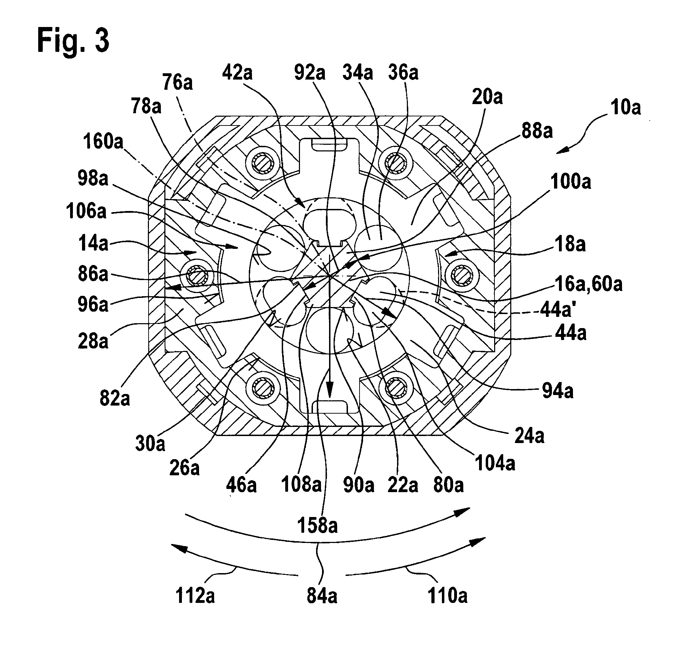

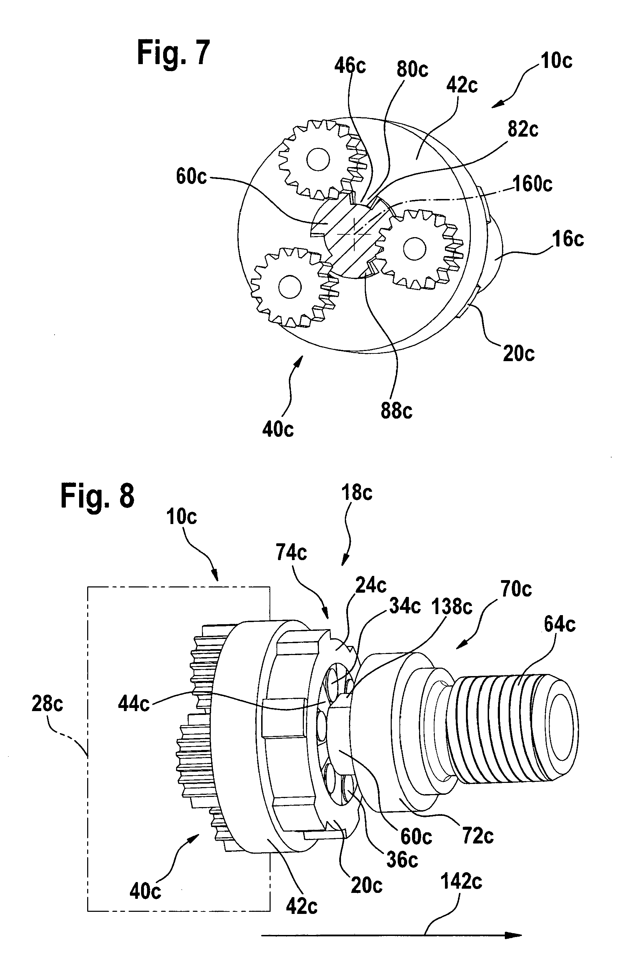

In der Figur 3 ist die Arretiervorrichtung 14a bzw. die Drehlagervorrichtung 18a im Detail als Schnittdarstellung entlang der Linie III-III der Figur 2 dargestellt. Ein drehbar gelagerter Planetenträger 42a des Planetengetriebes 40a, über den die Abtriebsspindel 60a vom Antriebsmotor 58a antreibbar ist, ist als Bestandteil der Arretiervorrichtung 14a auf der Abtriebsspindel 60a angeordnet. Zu einer Übertragung des Drehmoments weist der Planetenträger 42a drei radial zu einem Mittelpunkt 76a der Abtriebsspindel 60a weisende und gleichmäßig um einen Umfang 78a der Abtriebsspindel 60a angeordnete Antriebsmittel 46a in der Form von Fortsätzen 80a auf, von denen jeder in je eine zum Mittelpunkt 76a weisende und über den Umfang 78a verteilte Ausnehmung 82a der Abtriebsspindel 60a mit Spiel in eine Umfangsrichtung 84a eingreift (siehe auch Figur 7).

Ferner besitzt die Arretiervorrichtung 14a drei in radialer Richtung 86a vom Mittelpunkt 76a weg weisende an die Abtriebsspindel 60a angeformte Fortsätze 88a zur Drehmomentübertragung auf. Die Fortsätze 88a enden in einer ebenen Fläche 90a, die sich senkrecht zu einem Durchmesser 92a der Abtriebsspindel 60a erstreckt.

Zudem weist die Arretiervorrichtung 14a ein Klemmmittel 20a auf, das von einem äußeren Klemmring 24a gebildet ist, der mit einem gleichmäßigen radialen Abstand 94a zum Mittelpunkt 76a um die Abtriebsspindel 60a angeordnet ist. Ferner weist der äußere Klemmring 24a eine Lagerfläche 26a zu einer direkten Abstützung in dem Getriebegehäuse 28a auf. Die Lagerfläche 26a wird von einer Außenumfangsfläche 96a des äußeren Klemmrings 24a, der sich drehfest, form- und kraftschlüssig an dem Getriebegehäuse 28a abstützt, gebildet.

In dem radialen Abstand 94a jeweils radial zwischen einer der Flächen 90a und einer Innenfläche 98a des äußeren Klemmrings 24a sind drei Arretierwälzkörper 34a angeordnet. Zu einer Positionierung der Arretierwälzkörper 34a in einem mittleren Bereich 100a der Fläche 90a bzw. in seiner Freigabeposition weist der Planetenträger 42a drei Positioniermittel 44a auf. Die Positioniermittel 44a sind von in axialer Richtung 102a weisenden Höckern 104a gebildet (siehe Figur 2), von denen je einer in Umfangsrichtung 84a zwischen zwei Arretierwälzkörpern 34a angeordnet ist.

Ferner bildet das Klemmmittel 20a bzw. der äußere Klemmring 24a eine Lauffläche 22a und insbesondere eine radial innere Lauffläche 30a der Drehlagervorrichtung 18a. Auf dieser Lauffläche 30a laufen bzw. wälzen sich die Arretierwälzkörper 34a in einem Betriebszustand der Drehmomentübertragung vom Antriebsmotor 58a zur Abtriebsspindel 60a ab. Die radial innere Lauffläche 30a und die Fläche 90a der Abtriebsspindel 60a sind auf Maß geschliffen. Durch einen somit möglichen passgenauen Lagersitz der Arretierwälzkörper 34a im radialen Abstand 94a zwischen der Fläche 90a und dem Klemmring 24a bilden die Arretierwälzkörper 34a Wälzlagermittel 36a der Drehlagervorrichtung 18a. Eine kraftschlüssige Verbindung zwischen den Arretierwälzkörpern 34a, dem Klemmring 24a und dem Getriebegehäuse 28a bildet ein Wälzlager 106a, über das die Abtriebsspindel 60a drehbar gelagert ist. Das Klemmmittel 20a bzw. der Klemmring 24a ist in radialer Richtung fest im Getriebegehäuse 28a, d.h. ohne Radialspiel gelagert, und zwar ist der Klemmring 24a in radialer Richtung 86a im Getriebegehäuse 28a eingeklemmt, könnte jedoch auch durch eine ändere, dem Fachmann als sinnvoll erscheinende Befestigungsart im Getriebegehäuse 28a befestigt sein, wie insbesondere mittels einer Schraubverbindung. In Richtung eines Kraftflusses einer Lagerkraft 158a der von der Drehlagervorrichtung 18a gelagerten Abtriebsspindel 60a weist die Handwerkzeugmaschinenvorrichtung ein Radialspiel kleiner als 0,05 mm auf (Fig. 3). Die Drehlagervorrichtung 18a zur Lagerung der Abtriebsspindel 60a und die Arretiervorrichtung 14a bzw. das Klemmmittel 20a der Arretiervorrichtung 14a sind in einer gemeinsamen, senkrecht zu einer Drehachse 160a der Abtriebsspindel 60a verlaufenden Ebene 162a angeordnet (Figuren 2 und 3). Alternativ und/oder zusätzlich zu einer Abstützung von Lagerkräften der Abtriebsspindel 60a über die Arretierwälzkörper 34a könnte auch eine Abstützung von Lagerkräften der Abtriebsspindel 60a über Positioniermittel 44a' erfolgen, indem diese sich in radialer Richtung 86a bis zur Lauffläche 22a erstrecken, wie dies in Figur 3 schematisiert angedeutet ist.

Treibt der Antriebsmotor 58a über die Antriebswelle den Planetenträger 42a an, so wird das Drehmoment vom Planetenträger 42a über die Antriebsmittel 46a bzw. die Fortsätze 80a und die Ausnehmungen 82a auf die Abtriebsspindel 60a und damit auf das Bohrfutter 62a übertragen. Eine sichere Lagerung und Antrieb der Abtriebsspindel 60a wird dadurch erreicht, dass die Arretierwälzkörper 34a bzw. die Wälzlagermittel 36a durch die Positioniermittel 44a in ihrer Freigabeposition im mittleren Bereich 100a der Flächen 90a gehalten werden. Ein Verklemmen der Arretierwälzkörper 34a wird verhindert und die Arretiervorrichtung 14a ist geöffnet.

Wird bei abgeschaltetem Antriebsmotor 58a ein Drehmoment vom Bohrfutter 62a über die Abtriebsspindel 60a auf die Fortsätze 80a des Planetenträgers 42a übertragen, wirkt dies drehmomentübertragend auf die Positioniermittel 44a. Die Arretierwälzkörper 34a werden aufgrund ihres Beharrungsvermögens in einen Randbereich 108a der Fläche 90a, der einen geringeren radialen Abstand 94a aufweist als der mittlere Bereich 100a der Fläche 90a, gedrängt und verklemmen sich zwischen der Fläche 90a und dem Klemmring 24a (nicht gezeigt). Die Abtriebsspindel 60a ist über die Flächen 90a, die Arretierwälzkörper 34a und über den Klemmring 24a drehfest im Getriebegehäuse 28a abgestützt. Die Abtriebsspindel 60a wird selbsttätig gehäusefest arretiert. Werkzeuge 68a können im Bohrfutter 62a gespannt und gelöst werden und/oder das Bohrfutter 62a kann auf die Abtriebsspindel 60a aufgeschraubt bzw. von der Abtriebsspindel 60a abgeschraubt werden, ohne dass von Hand am Bohrfutter ein Gegendrehmoment aufgebracht werden muss.

Die Arretiervorrichtung 14a ist symmetrisch ausgeführt, so dass vom Antriebsmotor 58a ein Drehmoment in beide Drehrichtungen 110a, 112a über die Arretiervorrichtung 14a auf die Abtriebsspindel 60a und das Bohrfutter 62a übertragen werden kann. In beide Drehrichtungen 110a, 112a öffnet die Arretiervorrichtung 14a selbsttätig. Ferner sperrt die Arretiervorrichtung 14a bei abgeschaltetem Antriebsmotor 58a in beide Drehrichtungen 110a, 112a, wenn ein Drehmoment vom Bohrfutter 62a über die Abtriebsspindel 60a auf den Planetenträger 42a übertragen wird.

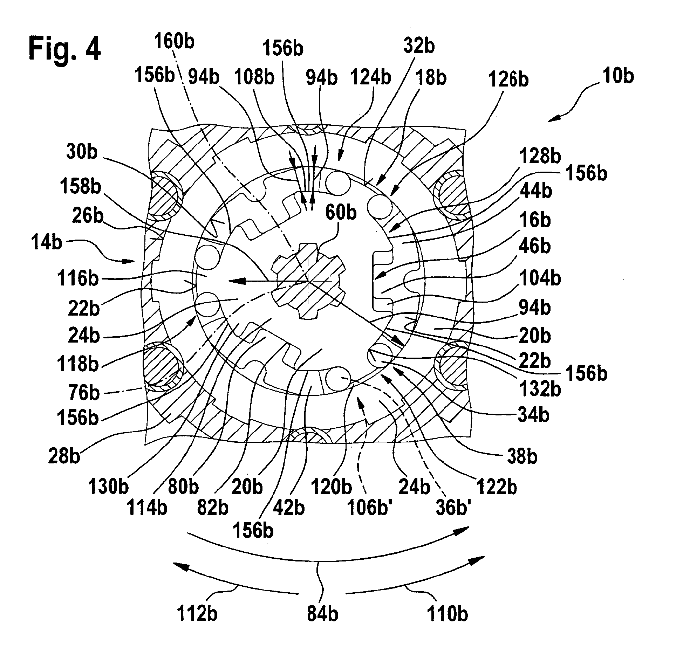

In den Figuren 4 bis 13 sind alternative Ausführungsbeispiele der Werkzeugmaschinenvorrichtung 10a dargestellt. Im Wesentlichen sind gleich bleibende Bauteile, Merkmale und Funktionen grundsätzlich mit den gleichen Bezugszeichen beziffert. Zur Unterscheidung der Ausführungsbeispiele sind jedoch den Bezugszeichen der Ausführungsbeispiele die Buchstaben a bis h hinzugefügt. Die nachfolgende Beschreibung beschränkt sich im Wesentlichen auf die Unterschiede zu dem Ausführungsbeispiel in den Figuren 1 bis 3, wobei bezüglich gleich bleibender Bauteile, Merkmale und Funktionen auf die Beschreibung des Ausführungsbeispiels in den Figuren 1 bis 3 verwiesen werden kann.

Die Figur 4 zeigt eine alternative Ausführungsform der Handwerkzeugmaschinenvorrichtung. Der hier dargestellte Schnitt durch eine Handwerkzeugmaschinenvorrichtung 10b zeigt zusätzlich zu einer mit einer Arretiervorrichtung 14b einstückig ausgebildeten Drehlagervorrichtung 18b eine Abtriebseinheit 16b, die eine Abtriebsspindel 60b und ein auf der Abtriebsspindel 60b formschlüssig gehaltenes Klemmmittel 20b aufweist. Das Klemmmittel 20b ist von einem inneren Klemmring 24b bzw. von einer dreieckigen Scheibe 114b gebildet. Das Klemmmittel 20b bzw. radiale Fortsätze 116b an Ecken 118b der Dreiecksform der Scheibe 114b bilden jeweils eine Lauffläche 22b der Drehlagervorrichtung 18b bzw. je eine radial äußere Lauffläche 32b. Die radial äußere Lauffläche 32b läuft in einem Betriebszustand der Drehmomentübertragung von einem nicht gezeigten Antriebsmotor zur Abtriebsspindel 60b auf einer radial inneren Lauffläche 30b, die von einem weiteren Klemmmittel 20b in der Form eines äußeren Klemmrings 24b, der mit einem radialen Abstand 94b um einem Mittelpunkt 76b der Abtriebsspindel 60b angeordnet ist. Der radial äußere Klemmring 24b ist so um die Abtriebsspindel 60b bzw. die Scheibe 114b angeordnet, das zwischen der Lauffläche 30b und der Lauffläche 32b ein radialer Spalt 120b von weniger als 0,1 mm eingestellt ist, wodurch die Drehlagervorrichtung 18b ein Gleitlagermittel 38b eines Gleitlagers 122b aufweist.

Auch hier wird ein Drehmoment des Antriebsmotors über Antriebsmittel 46b in der Form von radial zum Mittelpunkt 76b weisende Fortsätze 80b eines Planetenträger 42b, die in Ausnehmungen 82b der Abtriebseinheit 16b bzw. der Scheibe 114b eingreifen, übertragen. Ferner werden Arretierwälzkörper 34b durch an den Planetenträger 42b angeformte und in axialer Richtung zu einem hier nicht gezeigten Bohrfutter weisende Positioniermittel 44b positioniert. Hierbei ist an beiden Seiten 124b, 126b der Fortsätze 116b in einer Freigabeposition ein Arretierwälzkörper 34b angeordnet. Auf der dem Fortsatz 116b abgewandten Seite 128b jedes Arretierwälzkörpers 34b ist an die Scheibe 114b eine Ausformung 130b angeformt, die einen radialen Abstand 94b zwischen dem Fortsatz 116b und dem äußeren Klemmring 24b gegenüber einem radialen Abstand 94b an der Freigabeposition des Arretierwälzkörpers 34b verringert.

Die Anordnung der Arretierwälzkörper 34b auf beiden Seiten 124b, 126b des Fortsatzes 116b ist zu einer Arretierungsmöglichkeit der Abtriebsspindel 60b in beide Drehrichtungen 110b, 112b vorgesehen. Wird ein Drehmoment von der Abtriebsspindel 60b auf den Planetenträger 42b übertragen, wird der jeweils entgegen der Richtung des Drehmoments angeordnete Arretierwälzkörper 34b aufgrund seines Beharrungsvermögens von seiner Freigabeposition in einen Randbereich 108b der Ausformung 130b gedrängt und dadurch, dass eine Rampe 156b des Randbereichs 108b einen geringeren radialen Abstand 94b aufweist als die Freigabeposition, verklemmen sich die Wälzkörper zwischen der Ausformung 130b und dem Klemmring 24a, wodurch eine Drehung der Abtriebsspindel 60b unterbunden wird (nicht gezeigt).

Alternativ können die Arretierwälzkörper 34b dieses Ausführungsbeispiels als Wälzlagermittel 36b' fungieren, wobei der radiale Spalt 120b und das Gleitlager 122b entfallen und ein Wälzlager 106b' gebildet wird. Hierbei müssen für eine spielarme Lagerung der Arretierwälzkörper 34b bzw. der Wälzlagermittel 36b' die radial äußere Lauffläche 32b des inneren Klemmrings 24b bzw. der Scheibe 114b und die radial innere Lauffläche 30b des äußeren Klemmrings 24b sowie Ruhelageflächen 132b der Scheibe 114b, die zu einer Einnahme der Freigabeposition der Arretierwälzkörper 34b vorgesehen sind, auf Maß geschliffen sein.

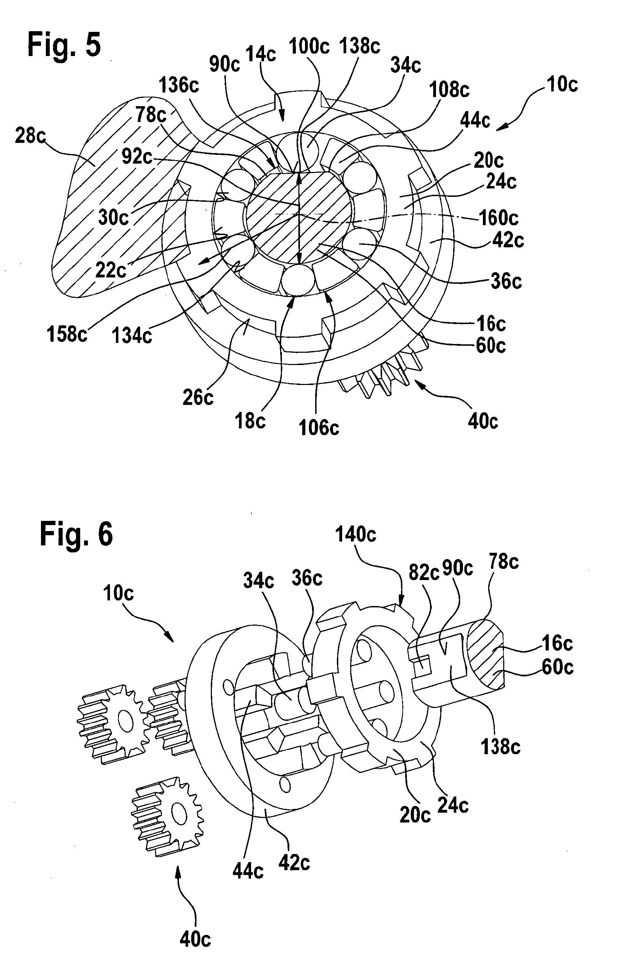

Die Figur 5 zeigt eine dritte bevorzugte Ausführungsform der Handwerkzeugmaschinenvorrichtung. Auch bei der hier gezeigten Handwerkzeugmaschinenvorrichtung 10c ist eine Arretiervorrichtung 14c und eine Drehlagervorrichtung 18c zumindest teilweise einstückig ausgeführt, da die Arretiervorrichtung 14c ein Klemmmittel 20c in der Form eines Klemmrings 24c aufweist, welches bzw. welcher eine Lauffläche 22c und insbesondere eine radial innere Lauffläche 30c der Drehlagervorrichtung 18c aufweist und mittels einer Lagerfläche 26c zu einer direkten Abstützung in einem hier nur schematisch gezeigten Getriebegehäuse 28c dient. Somit bildet der Klemmring 24c einen Bestandteil eines Wälzlagers 106c. Zudem weist das Wälzlager 106c bzw. die Drehlagervorrichtung 18c mehrere bzw. fünf von einem Arretierwälzkörper 34c differierende Wälzlagermittel 36c auf. Die fünf Wälzlagermittel 36c und der Arretierwälzkörper 34c sind in einer Umfangsrichtung 84c durch sechs Positioniermittel 44c gleichmäßig beabstandet um eine Abtriebseinheit 16c herum angeordnet. Zu einer spielarmen Anordnung der Lagerkomponenten sind zusätzlich zu der radial inneren Lauffläche 30c des Klemmrings 24c innere Lagerflächen 134c der Wälzlagermittel 36c auf Maß geschliffen.

Wie in der Figur 6, die eine Explosionsdarstellung der Handwerkzeugmaschinenvorrichtung 10c zeigt, zu sehen ist, weist die Abtriebsspindel 60c an einem Bereich 136c ihres Umfangs 78c eine Abflachung 138c auf, die eine ebene Fläche 90c, die sich senkrecht zu einem Durchmesser 92c der Abtriebsspindel 60c erstreckt, bildet. In einem mittleren Bereich 100c der Fläche 90c wird der Arretierwälzkörper 34c in seiner Freigabeposition durch zwei in Umfangsrichtung 84c an beiden Seiten an dem Arretierwälzkörper 34c angeordneten Positioniermitteln 44c gehalten.

Ferner weisen die Wälzlagermittel 36c zu einer eindeutigen Montage der Bauteile in Bezug auf den Arretierwälzkörper 34c eine größere Länge als der Arretierwälzkörper 34c auf. Zu einer axialen Begrenzung des Arretierwälzkörpers 34c und der Wälzlagermittel 36c ist an einer von einem Planetenträger 42c weg weisenden Seite 140c des Klemmrings 24c ein hier nicht näher gezeigter Anschlag angeordnet.

Eine Übertragung des Drehmoments erfolgt, wie in den Figuren 6 und 7 zu sehen ist, analog des in den Figuren 2 und 3 beschriebenen Ablaufs mittels in Ausnehmungen 82c der Abtriebsspindel 60c eingreifenden Antriebsmitteln 46c bzw. Fortsätzen 80c des Planetenträgers 42c. Auch ein Arretierungsvorgang erfolgt wie zu Ausführungsbeispiel a beschrieben, über eine Arretierung des Arretierwälzkörpers 34c zwischen einem Randbereich 108c der Fläche 90c und dem Klemmring 24c.

Die Figur 8 zeigt die Handwerkzeugmaschinenvorrichtung 10c, angeordnet in einem schematisch und aufgebrochen gezeigten Getriebegehäuse 28c in einem montierten Zustand, wobei entlang einer Übertragungsrichtung 142c des Drehmoments im Arbeitsbetrieb des hier nicht gezeigten Antriebsmotors der Planetenträger 42c eines Planetengetriebes 40c, gefolgt von der in einem Endbereich 70c der Abtriebsspindel 60c angeordneten Drehlagervorrichtung 18c mit dem Klemmring 24c und einem darin angeordneten Arretierwälzkörper 34c sowie angeordneten Positioniermitteln 44c und Wälzlagermitteln 36c, angeordnet ist. Danach erstreckt sich die Abtriebsspindel 60c bis zu einem in einem Endbereich 74c angeordneten Lager 72c, an das sich eine Gewindeverbindung 64c zu einer Kopplung eines hier nicht gezeigten Bohrfutters anschließt. Generell wäre es jedoch auch möglich, eine andere alternative Werkzeugaufnahme zu koppeln.

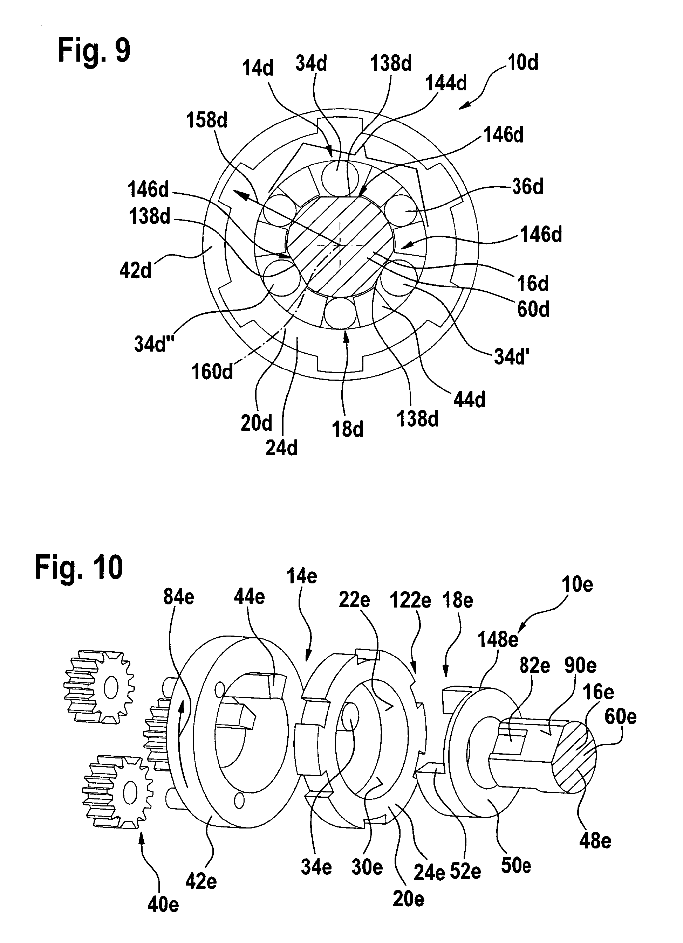

In der Figur 9 ist eine weitere alternative Ausführungsform gezeigt. Gegenüber der Anordnung des Ausführungsbeispiels der Figuren 5 bis 8 weist diese Handwerkzeugmaschinenvorrichtung 10d eine abgewandelte Anordnung von Wälzlagermitteln 36d und Arretierwälzkörpern 34d um eine Abtriebsspindel 60d einer Abtriebseinheit 16d auf. Zwei Positionen der Wälzlagermittel 36c gemäß dem Ausführungsbeispiel c sind durch zwei zusätzliche Arretierwälzkörper 34d', 34d" ersetzt. Somit ergibt sich in Umfangsrichtung 84d eine Abfolge von drei Gruppen 144d, jeweils bestehend aus einem Positioniermittel 44d, einem Arretierwälzkörper 34d, einem weiteren Positioniermittel 44d und schließlich einem Wälzlagermittel 36d. Somit weist auch die Abtriebsspindel 60d drei Abflachungen 138d in drei Bereichen 146d zur Positionierung der Arretierwälzkörper 34d in ihrer Freigabeposition auf. Die Funktionen einer Arretiervorrichtung 14d und einer Drehlagervorrichtung 18d erfolgt wie für die zuvor beschriebenen Ausführungsbeispiele a und c.

Die Figur 10 zeigt eine weitere alternative Ausführungsform der Handwerkzeugmaschinenvorrichtung. Bei dieser Handwerkzeugmaschinenvorrichtung 10e sind die in den Ausführungsbeispielen a, c und d ein Wälzlager 106a, 106c, 106d bildenden Wälzlagermittel 36a, 36c, 36d ersetzt, indem eine Drehlagervorrichtung 18e eine mit einer Welle 48e einer Abtriebseinheit 16e direkt gekoppelte Gleitlagerbuchse 50e aufweist. Die Gleitlagerbuch-se 50e weist in einem Bereich ihres Umfangs 148e ein Aufnahmemittel 52e zu einer Aufnahme eines Arretierwälzkörpers 34e und in Umfangsrichtung 84e an beide Seiten des Arretierwälzkörpers 34e anschließende Positioniermittel 44e auf. Die Gleitlagerbuchse 50e ist aus Bronze gefertigt, um mit einer Lauffläche 22a bzw. einer radial inneren Lauffläche 30e eines Klemmmittels 20e einer Arretiervorrichtung 14e, ausgeführt als Klemmring 24e, ein Gleitlager 122e zu bilden. Für die Funktionen der Arretierung des Arretierwälzkörpers 34e in einem radialen Abstand zwischen der Lauffläche 30e und einer Fläche 90e der Abtriebsspindel 60e wird auf die in den vorhergehenden Ausführungsbeispielen a bis d beschriebenen Mechanismen verwiesen.

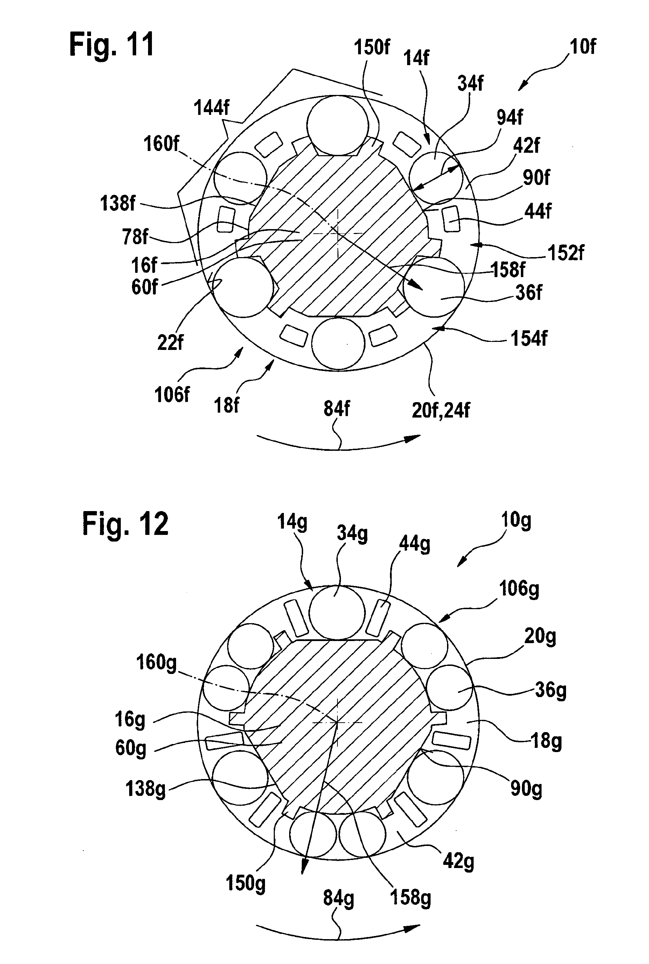

In der Figur 11 ist eine weitere alternative Handwerkzeugmaschinenvorrichtung 10f in einer schematisierten Schnittdarstellung gezeigt. Eine Anordnung von Arretierwälzkörpern 34f, Wälzlagermitteln 36f und Positioniermitteln 44f entspricht der in Figur 9 zu Ausführungsbeispiel d gezeigten Anordnung in Gruppen 144f um einen Umfang 78f einer Abtriebsspindel 60f einer Abtriebseinheit 16f. Ferner weist die Abtriebsspindel 60f sechs radiale über den Umfang 78f der Abtriebsspindel 60f verteilte Fortsätze 150f auf, von denen jeweils einer an einer Seite 152f, 154f eines der Wälzlagermittel 36f angeordnet ist, wodurch das Wälzlagermittel 36f in einer Umfangsrichtung 84f relativ zu der Abtriebseinheit 16f festgelegt ist. Auch hier bilden eine radial innere Lauffläche 30f eines Klemmmittels 20f einer Arretiervorrichtung 14f in der Form eines hier nur schematisch angedeuteten Klemmrings 24f mit den Wälzlagermitteln 36f ein Wälzlager 106f. Eine Übertragung eines Drehmoments wird von den Positioniermitteln 44f, die jeweils an einer Seite der Fortsätze 150f in einer Drehbewegung anlegbar sind, getätigt. Zu der Funktion der Arretierung mittels der Arretierwälzkörper 34f in einem radialen Abstand 94f zwischen der Lauffläche 30f und einer Fläche 90f der Abtriebsspindel 60f soll auch hier auf die vorhergehenden Ausführungsbeispiele verwiesen werden.

Die Figur 12 zeigt eine weitere Ausführungsform der Handwerkzeugmaschinenvorrichtung. Die hier schematisiert im Schnitt gezeigte Handwerkzeugmaschinenvorrichtung 10g unterscheidet sich von der Handwerkzeugmaschinenvorrichtung 10f der Figur 11 dadurch, dass in einer Umfangsrichtung 84g zwischen zwei radialen Fortsätzen 150g einer Abtriebsspindel 60f einer Abtriebseinheit 16g zwei Wälzlagermittel 36g, die einen kleineren Durchmesser wie die Wälzlagermittel 36f der Figur 11 aufweisen, angeordnet sind. Zu Lager-, Drehmomentübertragungs- und Arretierfunktion wird erneut auf die vorher beschriebenen Ausführungsbeispiele verwiesen.

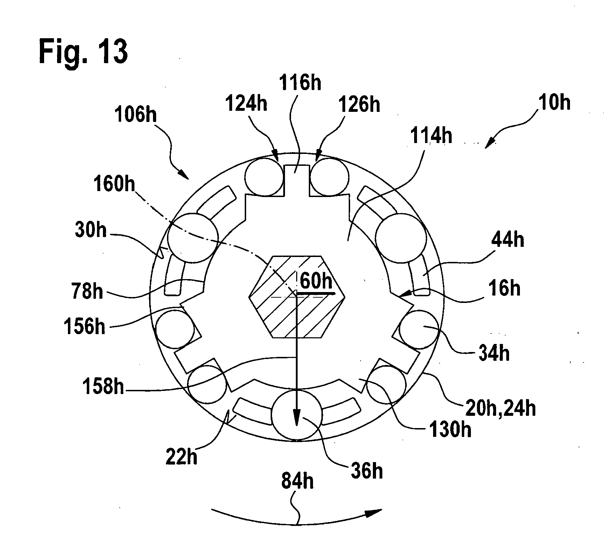

In der Figur 13 ist eine Handwerkzeugmaschinenvorrichtung 10h in einer weiteren alternativen Ausführung, die eine Abwandlung der Handwerkzeugmaschinenvorrichtung 10b der Figur 4 schematisch darstellt, gezeigt. Eine Abtriebseinheit 16h weist analog zu dem Ausführungsbeispiel der Figur 4 eine auf einer Abtriebsspindel 60h formschlüssig gehaltene Scheibe 114h auf, an die drei radial über den Umfang 78h der Abtriebseinheit 16h verteilte Fortsätze 116h angeformt sind, an deren Seiten 124h, 126h je ein Arretierwälzkörper 34h angeordnet ist. Im Unterschied jedoch zu Ausführungsbeispiel b weist eine Drehlagervorrichtung 18h drei zu den Arretierwälzkörpern 34h differierende Wälzlagermittel 36h auf, wodurch zu einer Lagerung der Abtriebseinheit 16h bzw. der Abtriebsspindel 60h zwischen einer radial inneren Lauffläche 30h eines hier nur schematisch angedeuteten Klemmrings 24h einer Arretiervorrichtung 14h ein Wälzlager 106h gebildet wird. Eine Übertragung eines Drehmoments wird von den Positioniermitteln 44h, die jeweils in einer Umfangsrichtung 84h zwischen je einem Arretierwälzkörper 34h und einem Wälzlagermittel 36h angeordnet sind, getätigt. Zu einer Erläuterung einer Arretierfunktion wird auf die Beschreibung von Ausführungsbeispiel b der Figur 4 verwiesen.

## Patentansprüche

1. Handwerkzeugmaschinenvorrichtung, insbesondere für einen Schrauber (12a-h), mit einem Planetengetriebe (40a-h) und mit einer Arretiervorrichtung (14a-h) zu einem Arretieren einer Abtriebseinheit (16a-h), die zumindest einen Arretierwälzkörper (34a-h) aufweist, und mit einer Drehlagervorrichtung (18a-h) der Abtriebseinheit (16a-h), **dadurch gekennzeichnet, dass** die Arretiervorrichtung (14a-h) und die Drehlagervorrichtung (18a-h) zumindest teilweise einstückig ausgebildet sind, so dass zumindest ein Bauteil der Arretiervorrichtung (14a-h) eine Lagerkraft des von der Drehlagervorrichtung (18a-h) drehbar gelagerten Bauteils radial nach außen abstützt und die Arretiervorrichtung (14a-h) ein Klemmmittel (20a-h) aufweist, welches eine Lauffläche (22a-h) der Drehlagervorrichtung (18a-h) bildet, und das Klemmmittel (20a-h) von einem Klemmring (24a-h) gebildet ist, wobei ein Planetenträger (42a-h) des Planetengetriebes (40a-h) zumindest ein Positioniermittel (44a-h) zu einer Positionierung des zumindest einen Arretierwälzkörpers (34a-h) in seiner Freigabeposition aufweist.

2. Handwerkzeugmaschinenvorrichtung nach Anspruch 1, **dadurch gekennzeichnet, dass** der Klemmring (24a-h) eine Lagerfläche (26a-h) zu einer direkten Abstützung in einem Getriebegehäuse (28a-h) aufweist.

3. Handwerkzeugmaschinenvorrichtung zumindest nach Anspruch 1, **dadurch gekennzeichnet, dass** das Klemmmittel (20a-h) eine radial innere Lauffläche (30a-h) bildet.

4. Handwerkzeugmaschinenvorrichtung zumindest nach Anspruch 1, **dadurch gekennzeichnet, dass** das Klemmmittel (20b, 20h) eine radial äußere Lauffläche (32b, 32h) bildet.

5. Handwerkzeugmaschinenvorrichtung nach einem der vorhergehenden Ansprüche, **dadurch gekennzeichnet, dass** die Arretiervorrichtung (14a, 14b) zumindest einen Arretierwälzkörper (34a, 34b) aufweist, der ein Wälzlagermittel (36a, 36b) der Drehlagervorrichtung (18a, 18b) bildet.

6. Handwerkzeugmaschinenvorrichtung nach einem der vorhergehenden Ansprüche, **dadurch gekennzeichnet, dass** die Drehlagervorrichtung (18c-h) wenigstens ein von einem Arretierwälzkörper (34c-h) differierendes Wälzlagermittel (36c-h) aufweist.

7. Handwerkzeugmaschinenvorrichtung nach einem der vorhergehenden Ansprüche, **dadurch gekennzeichnet, dass** die Drehlagervorrichtung (18b, 18e) wenigstens ein Gleitlagermittel (38b, 38e) aufweist.

8. Handwerkzeugmaschinenvorrichtung nach einem der vorhergehenden Ansprüche, **dadurch gekennzeichnet, dass** ein Planetenträger (42a-h) des Planetengetriebes (40a-h) zumindest ein Antriebsmittel (46a-h) zu einer Übertragung eines Drehmoments aufweist.

9. Handwerkzeugmaschinenvorrichtung nach einem der vorhergehenden Ansprüche, **dadurch gekennzeichnet, dass** die Drehlagervorrichtung (18e) eine mit einer Welle (48e) der Abtriebseinheit (16e) direkt gekoppelte Gleitlagerbuchse (50e) aufweist.

10. Handwerkzeugmaschinenvorrichtung zumindest nach Anspruch 9, **dadurch gekennzeichnet, dass** die Gleitlagerbuchse (50e) zumindest ein Aufnahmemittel (52e) zu einer Aufnahme zumindest eines Arretierwälzkörpers (34e) aufweist.

11. Handwerkzeugmaschine mit einer Handwerkzeugmaschinenvorrichtung (10a-h) nach zumindest einem der Ansprüche 1 bis 10.

## Claims

1. Portable power tool device, in particular for a screwdriver (12a-h), having a planetary transmission (40a-h) and having a locking device (14a-h) for locking an output unit (16a-h), said locking device (14a-h) having at least one rolling locking element (34a-h), and having a rotary bearing device (18a-h) of the output unit (16a-h), **characterized in that** the locking device (14a-h) and the rotary bearing device (18a-h) are formed at least partially in one piece such that at least one component of the locking device (14a-h) absorbs, radially towards the outside, a bearing force of the component rotatably supported by the rotary bearing device (18a-h), and the locking device (14a-h) has a clamping means (20a-h) which forms a running surface (22a-h) of the rotary bearing device (18a-h), and the clamping means (20a-h) is formed by a clamping ring (24a-h), wherein a planet carrier (42a-h) of the planetary transmission (40a-h) has at least one positioning means (44a-h) for positioning the at least one rolling locking element (34a-h) in its release position.

2. Portable power tool device according to Claim 1, **characterized in that** the clamping ring (24a-h) has a bearing surface (26a-h) for direct support in a transmission housing (28a-h).

3. Portable power tool device at least according to Claim 1, **characterized in that** the clamping means (20a-h) forms a radially inner running surface (30a-h).

4. Portable power tool device at least according to Claim 1, **characterized in that** the clamping means (20b, 20h) forms a radially outer running surface (32b, 32h).

5. Portable power tool device according to one of the preceding claims, **characterized in that** the locking device (14a, 14b) has at least one rolling locking element (34a, 34b) which forms a rolling bearing means (36a, 36b) of the rotary bearing device (18a, 18b).

6. Portable power tool device according to one of the preceding claims, **characterized in that** the rotary bearing device (18c-h) has at least one rolling bearing means (36c-h) that is different from a rolling locking element (34c-h).

7. Portable power tool device according to one of the preceding claims, **characterized in that** the rotary bearing device (18b, 18e) has at least one plain bearing means (38b, 38e).

8. Portable power tool device according to one of the preceding claims, **characterized in that** a planet carrier (42a-h) of the planetary transmission (40a-h) has at least one drive means (46a-h) for transmitting a torque.

9. Portable power tool device according to one of the preceding claims, **characterized in that** the rotary bearing device (18e) has a plain bearing bush (50e) directly coupled to a shaft (48e) of the output unit (16e).

10. Portable power tool device at least according to Claim 9, **characterized in that** the plain bearing bush (50e) has at least one receiving means (52e) for receiving at least one rolling locking element (34e).

11. Portable power tool having a portable power tool device (10a-h) according to at least one of Claims 1 to 10.

## Revendications

1. Dispositif de machine-outil manuelle, en particulier pour un tournevis (12a-h), comprenant un engrenage planétaire (40a-h) et un dispositif de blocage (14a-h) pour le blocage d'une unité de prise de force (16a-h) qui présente au moins un corps de roulement de blocage (34a-h), et comprenant un dispositif de palier pivotant (18ah) de l'unité de prise de force (16a-h), **caractérisé en ce que** le dispositif de blocage (14a-h) et le dispositif de palier pivotant (18ah) sont réalisés au moins en partie d'une seule pièce, de telle sorte qu'au moins un composant du dispositif de blocage (14a-h) supporte radialement vers l'extérieur une force de palier du composant supporté à rotation par le dispositif de palier pivotant (18a-h) et le dispositif de blocage (14ah) présente un moyen de serrage (20a-h), lequel forme une surface de roulement (22a-h) du dispositif de palier pivotant (18a-h), et le moyen de serrage (20a-h) est formé par une bague de serrage (24a-h), un porte-planétaire (42a-h) de l'engrenage planétaire (40a-h) présentant au moins un moyen de positionnement (44a-h) en vue d'un positionnement de l'au moins un corps de roulement de blocage (34a-h) dans sa position de libération.

2. Dispositif de machine-outil manuelle selon la revendication 1, **caractérisé en ce que** la bague de serrage (24a-h) présente une surface de palier (26a-h) en vue d'un support direct dans un boîtier de transmission (28a-h).

3. Dispositif de machine-outil manuelle selon au moins la revendication 1, **caractérisé en ce que** le moyen de serrage (20a-h) forme une surface de roulement radialement interne (30a-h).

4. Dispositif de machine-outil manuelle selon au moins la revendication 1, **caractérisé en ce que** le moyen de serrage (20b, 20h) forme une surface de roulement radialement extérieure (32b, 32h).

5. Dispositif de machine-outil manuelle selon l'une quelconque des revendications précédentes, **caractérisé en ce que** le dispositif de blocage (14a, 14b) présente au moins un corps de roulement de blocage (34a, 34b) qui forme un moyen de palier à roulement (36a, 36b) du dispositif de palier pivotant (18a, 18b).

6. Dispositif de machine-outil manuelle selon l'une quelconque des revendications précédentes, **caractérisé en ce que** le dispositif de palier pivotant (18c-h) présente au moins un moyen de palier à roulement (36c-h) différent d'un corps de roulement de blocage (34c-h).

7. Dispositif de machine-outil manuelle selon l'une quelconque des revendications précédentes, **caractérisé en ce que** le dispositif de palier pivotant (18b, 18e) présente au moins un moyen de palier lisse (38b, 38e).

8. Dispositif de machine-outil manuelle selon l'une quelconque des revendications précédentes, **caractérisé en ce qu'**un porte-planétaire (42a-h) de l'engrenage planétaire (40a-h) présente au moins un moyen d'entraînement (46a-h) en vue d'un transfert de couple.

9. Dispositif de machine-outil manuelle selon l'une quelconque des revendications précédentes, **caractérisé en ce que** le dispositif de palier pivotant (18e) présente une douille de palier lisse (50e) accouplée directement à un arbre (48e) de l'unité de prise de force (16e).

10. Dispositif de machine-outil manuelle selon au moins la revendication 9, **caractérisé en ce que** la douille de palier lisse (50e) présente au moins un moyen de réception (52e) pour recevoir au moins un corps de roulement de blocage (34e).

11. Machine-outil manuelle comprenant un dispositif de machine-outil manuelle (10a-h) selon au moins l'une quelconque des revendications 1 à 10.
